# EUROPÄISCHE PATENTSCHRIFT

(11) **EP 3 570 991 B1**
(45) Veröffentlichungstag und Bekanntmachung des Hinweises auf die Patenterteilung: **09.03.2022**
(21) Anmeldenummer: 18700412.2
(22) Anmeldetag: 11.01.2018
(51) Int. Cl.: B21F 1/00, B21D 7/12, B21D 7/16, H02G 1/12

(54) **VERFAHREN UND SYSTEM ZUR HERSTELLUNG VON BIEGETEILEN AUS ISOLIERTEM FLACHMATERIAL**
METHOD AND SYSTEM FOR PRODUCING BENT PARTS FROM INSULATED FLAT MATERIAL
PROCÉDÉ ET SYSTÈME DE FABRICATION DE PIÈCES PLIÉES À PARTIR DE MATÉRIAU PLAT ISOLÉ

(30) Priorität: 18.01.2017 DE 102017200745
(43) Veröffentlichungstag der Anmeldung: 27.11.2019
(73) Patentinhaber: WAFIOS Aktiengesellschaft, 72764 Reutlingen (DE)
(72) Erfinder: SAUTTER, Robin, 72793 Pfullingen (DE)
(74) Vertreter: Patentanwälte Ruff, Wilhelm, Beier, Dauster & Partner mbB
(86) Internationale Anmeldenummer: PCT/EP2018/050675
(87) Internationale Veröffentlichungsnummer: WO 2018/134115

(56) Entgegenhaltungen:
- EP-A1- 3 046 234
- EP-A2- 0 473 036
- WO-A1-01/74512
- DE-A1- 2 713 147
- JP-A- 2014 239 117
- US-B1- 7 480 987

## Beschreibung

Die Erfindung betrifft ein Verfahren zur Herstellung von Biegeteilen aus isoliertem Flachmaterial sowie ein zur Durchführung des Verfahrens geeignetes System mit einer Biegemaschine zum Biegen von isoliertem Flachmaterial und einer Abisoliereinrichtung zum Abisolieren von Abschnitten des isolierten Flachmaterials. Ein Verfahren gemäß dem Oberbegriff des Anspruchs 1 bzw. ein System gemäß dem Oberbegriff des Anspruchs 7 ist z.B. aus der US 7,480,987 B1 bekannt.

Auf dem Markt werden zunehmend Fahrzeuge mit voll- oder teilelektrischem Antrieb angeboten. Die Fahrzeuge besitzen meist leistungsfähige Energiespeichersysteme mit mehreren Batteriemodulen. Die elektrische Energie muss zwischen den einzelnen Batteriemodulen transportiert werden. Dazu werden isolierte und gebogene Kupfer- oder Aluminiumschienen verwendet, die auch als ^{"}Stromschienen" bezeichnet werden. Weiterhin werden zunehmend die in Längsrichtung von Fahrzeugen zwischen Front und Heck laufenden Kabelbäume durch Stromschienen ersetzt. Aufgrund der immer größer werdenden Ströme werden Stromschienen mit entsprechend großem stromführenden Querschnitt benötigt. Da die für die Verlegung von Stromschienen zur Verfügung stehenden Bauräume zum Teil relativ eng und geometrisch komplex sind, werden in vielen Fällen Stromschienen benötigt, die an einer oder mehreren Stellen Biegungen aufweisen.

Bei der Herstellung von isoliertem Flachmaterial für eine Stromschiene wird ein elektrisch leitendes Trägermaterial (z.B. ein Flachdraht aus Aluminium oder Kupfer) zunächst durchgehend mit einer elektrisch isolierenden Isolationsschicht ummantelt bzw. umhüllt. An den Kontaktstellen zum Anschluss der Stromschiene sollte die Isolationsschicht jedoch entfernt sein, so dass das Trägermaterial möglichst blank vorliegt. Hierfür wird ein Arbeitsschritt des "Abisolierens" durchgeführt. Das Abisolieren ist ein Vorgang, bei dem ein Teil der Isolierhülle (auch "Isolierung" oder "Isolation" oder "Isolationsschicht" genannt) eines elektrischen Leiters auf einer bestimmten, zum Anschluss erforderlichen Länge entfernt wird. Für die spätere Befestigung in der jeweiligen Einbauumgebung werden Stromschienen dann in der Regel entweder festgeschraubt, festgeklemmt oder festgelötet.

Heutzutage wird der Arbeitsschritt des Abisolierens nach dem Biegeprozess mithilfe gesonderter Stand-Alone Abisolier-Maschinen ausgeführt.

### AUFGABE UND LÖSUNG

Es ist eine Aufgabe der Erfindung, ein Verfahren und ein System der eingangs erwähnten Art bereitzustellen, die eine Fertigung teilweise abisolierter Stromschienen hoher Qualität mit hoher Produktivität erlauben. Dabei sollen die zur Kontaktierung vorgesehenen abisolierten Abschnitte des Trägermaterials eine möglichst unverletzte, saubere Oberfläche aufweisen.

Zur Lösung dieser Aufgabe stellt die Erfindung ein Verfahren mit den Merkmalen von Anspruch 1 bereit. Weiterhin wird ein System mit den Merkmalen von Anspruch 7 bereitgestellt.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei dem Verfahren wird das noch nicht abisolierte Flachmaterial der Biegemaschine von einem Materialvorrat (z.B. einer Haspel mit coil) zugeführt. Die Biegemaschine hat hierzu eine Einzugseinrichtung zum Zuführen von isoliertem Flachmaterial von dem Materialvorrat. In der Biegemaschine wird das isolierte Flachmaterial zu einem zweidimensional oder dreidimensional gebogenen Biegeteil aus isoliertem Flachmaterial umgeformt. Die Biegemaschine hat hierzu unter anderem eine der Einzugseinrichtung nachgeschaltete Biegeeinrichtung mit einem Biegekopf zum Biegen des isolierten Flachmaterials. Das Flachmaterial wird der Biegeeinrichtung mit Hilfe der Einzugseinrichtung zugeführt. Nach Abschluss der Biegeoperation, bei welcher an dem isolierten Flachmaterial eine oder mehrere Biegungen in einer oder mehreren Biegeebenen erzeugt werden, wird das Biegeteil in einer Schnittoperation von dem zugeführten isoliertem Flachmaterial abgetrennt. Hierzu ist an der Biegemaschine eine Schnitteinrichtung zum Abtrennen des Biegeteils von dem zugeführten isolierten Flachmaterial vorgesehen.

Gemäß dem beanspruchten Verfahren wird die Abisolier-Operation vor dem Abtrennen des Biegeteils von dem zugeführten Flachmaterial an den in der Biegemaschine geführten Flachmaterial durchgeführt. Die Biegemaschine hat zur Durchführung dieser Abisolier-Operation eine integrierte Abisoliereinrichtung zum Abisolieren von einem oder mehreren Abschnitten des isolierten Flachmaterials vor Abtrennen des Biegeteils von dem zugeführten Flachmaterial. Da die Abisolier-Operation vor dem Abtrennen des Biegeteils vom zugeführten Flachmaterial durchgeführt wird, ist kein Transport eines fertigen, noch nicht abisolierten Biegeteils zu einer von der Biegemaschine separaten Abisoliereinrichtung nötig. Da das Flachmaterial für die Abisolier-Operation in der Biegemaschine geführt und/oder gehalten wird, sind keine gesonderten Halterungen oder Manipulatoren zur Handhabung des Flachmaterials im Rahmen der Abisolier-Operation nötig.

Die Abisolier-Operation wird im Durchlaufverfahren durchgeführt. Das bedeutet, dass die Abisolier-Operation an einem durch die Abisoliereinrichtung durchlaufenden Flachmaterial durchgeführt wird. Für den eigentlichen Abisoliervorgang, d.h. die Abisolier-Operation, ist somit eine Bewegung des Flachmaterials, z.B. ein Vorschub, vorgesehen. Die Abisolierung findet während einer Bewegung des Flachmaterials statt, diese Bewegung trägt zur Abisolierung bei.

Vorzugsweise wird beim Durchlaufverfahren die Vorschubbewegung des Flachmaterials in Durchlaufrichtung durch entsprechende Ansteuerung der Einzugseinrichtung und/oder Arbeitsbewegungen der Biegeeinrichtung der Biegemaschine präzise vorgegeben. Es können somit an der Biegemaschine vorhandene Einrichtungen zur Erzeugung der Fortbewegung des Flachmaterials bei der Abisolier-Operation genutzt werden. Vorschubbewegungen und Rückzugsbewegungen des Flachmaterials können kombiniert genutzt werden. Die Abisolier-Operation kann dabei durchgeführt werden, ohne dass die für den Biegeprozess erforderlichen Arbeitsbewegungen dafür angehalten werden müssen. Die Biegemaschine kann ohne oder nahezu ohne zusätzliche Nebenzeiten für das Abisolieren produktiv arbeiten.

Bei Abisolierung im Durchlaufverfahren kann mit einer statisch angeordneten Abisoliereinrichtung bei Bedarf ein beliebig langer Abschnitt des Flachmaterials abisoliert werden. Eine statische Anordnung bedeutet hier, dass die Abisoliereinrichtung als Ganzes zur Durchführung der Abisolier-Operation nicht bewegt werden muss, also stationär an ihrer Position verbleiben kann.

Vorzugsweise wird die Abisolier-Operation mit Hilfe der Abisoliereinrichtung unter der Steuerung durch eine Steuereinrichtung der Biegemaschine durchgeführt. Diese Steuerung kann direkt oder indirekt realisiert werden. Bei einer direkten Steuerung steuert die Steuereinrichtung der Biegemaschine die Abisoliereinrichtung direkt. Bei einer indirekten Steuerung kann die Abisoliereinrichtung eine eigene Sub-Steuereinrichtung aufweisen, welche von der Steuereinrichtung der Biegemaschine oder einem übergeordneten Leitstand angesteuert wird bzw. mit dieser bzw. diesem synchronisiert ist. In diesen Varianten wird somit eine Prozess-integrierte Abisolier-Operation möglich, die unabhängig von Eingriffen eines Bedieners in einer Biegemaschine automatisch ablaufen kann. Das Verfahren kann dann komplett mit Hilfe einer Biegemaschine durchgeführt werden und kann in allen Schritten vollautomatisch ablaufen. Das Flachmaterial kann an beliebigen Stellen abisoliert werden. Der Ort des Abisolierens bzw. Lage und Länge eines abzuisolierenden Abschnitts des Flachmaterials können durch die Steuerung der Biegemaschine (direkt oder indirekt) präzise vorgegeben werden.

Eine besonders zuverlässige Variante zeichnet sich dadurch aus, dass die Abisoliereinrichtung zwischen der Einzugseinrichtung und einem Biegekopf der Biegeeinrichtung angeordnet ist. Dadurch kann u.a. erreicht werden, dass das abzuisolierende Flachmaterial während der Abisolier-Operation an beiden Seiten eines abzuisolierenden Abschnitts durch steuerbare Einrichtungen der Biegemaschine (insbesondere die Einzugseinrichtung und die Biegeeinrichtung) gehalten und/oder geführt wird. Dadurch kann die Abisolier-Operation mit besonders hoher Präzision und schonend für das freizulegende Trägermaterial durchgeführt werden. Außerdem kann durch die Anordnung zwischen Einzugseinrichtung und Biegekopf bzw. Biegeeinrichtung erreicht werden, dass die Gesamtbaugröße der Biegemaschine durch Integration der Abisoliereinrichtung nicht oder nicht wesentlich vergrößert wird.

Bei manchen Ausführungsformen ist die Einzugseinrichtung um eine Einzugsachse drehbar. Hierdurch wird es unter anderem möglich, das Flachmaterial zum Wechsel zwischen unterschiedlichen Biegeebenen durch Drehen der Einzugseinrichtung zu drehen. Bei manchen Varianten ist die Abisoliereinrichtung an der Einzugseinrichtung befestigt und mit der Einzugseinrichtung um die Einzugsrichtung drehbar. Hier sind besonders kompakte und flexible nutzbare Varianten realisierbar. Es wäre auch möglich, die Abisoliereinrichtung nicht an der Einzugseinrichtung zu befestigen und ggf. mittels eines eigenen Antriebs synchron mit der Einzugseinrichtung zu drehen.

Es gibt somit Varianten, bei denen die Abisoliereinrichtung nicht an der Einzugseinrichtung befestigt, sondern gesondert von dieser an ihrem Einbauort in der Biegemaschine montiert ist. Wenn eine Drehung synchron mit der Einzugseinrichtung gewünscht ist, kann dazu vorgesehen sein, die Abisoliereinrichtung mittels eines eigenen Antriebs synchron mit der Einzugseinrichtung zu drehen. Auch nicht-drehbare Varianten sind möglich.

Es gibt unterschiedliche Möglichkeiten, den Prozess des Abisolierens, also die Abisolier-Operation, technisch zu realisieren. Als prinzipiell nutzbare Verfahren kommen beispielsweise spanende Verfahren mit geometrisch bestimmter Schneide, wie z.B. das Schaben oder das Fräsen, insbesondere das Umfangsfräsen, oder das thermische Trennen oder das Abtragen des Isolationsmaterials mittels Laser in Betracht. Das Entfernen der Isolationsschicht mittels Bürsten oder Schleifen sind weitere Optionen.

Umfangreiche Untersuchungen haben zu der Erkenntnis geführt, dass in vielen oder allen Fällen eine Abisolier-Operation vorteilhaft sein kann, die dem Prozess des Schälens ähnelt. Dazu ist bei bevorzugten Ausführungsformen vorgesehen, dass die Abisoliereinrichtung mindestens ein Messer mit einer geraden Schneidkante aufweist, wobei das Messer zwischen einer Neutralstellung ohne Eingriff des Messers an dem isolierten Flachmaterial und einer Arbeitsstellung bewegbar ist, in welcher die Schneidkante des Messers derart in der Nähe einer freizulegenden (im Wesentlichen ebenen) Seitenfläche des Trägermaterials angeordnet ist, dass ein von dem Messer erfasster Teil der Isolationsschicht bei Fortbewegung des Flachmaterials relativ zum Messer von dem Trägermaterial entfernt wird. Die Abisoliereinrichtung dieser Variante kann dementsprechend auch als Schäleinrichtung bezeichnet werden.

Bei dieser Variante kann das in die Arbeitsstellung gebrachte Messer stehen bleiben bzw. unbeweglich sein, während die zum Abschälen erforderliche Relativbewegung zwischen dem Messer und dem Flachmaterial ausschließlich durch die Bewegung des Flachmaterials in seiner Durchlaufrichtung (Längsrichtung) bewirkt wird. Bei diesem Verfahren kann das Messer so gestaltet sein und angeordnet werden, dass beim Abisolieren das abgetrennte Isolationsmaterial in Form eines großen, zusammenhängenden "Spans" entsteht, der sich während des Schälprozesses in der Regel mehr oder weniger stark einrollt. Dadurch kann das abgetrennte Isolationsmaterial in großen Stücken zusammenhängend abgelöst und entfernt werden.

In der Regel reicht es, wenn im Bereich unterhalb der Abisoliereinrichtung ein Sammelbehälter bzw. Auffangbehälter zum Auffangen der Späne angebracht wird. Eine Absaugung von Isolationsmaterial ist in der Regel nicht nötig und ist in der bevorzugten Ausführungsform auch nicht vorgesehen. Der Prozess ist im Hinblick auf ein schonendes Freilegen des Trägermaterials im abzuisolierenden Abschnitt äußerst wirksam und sehr umweltfreundlich. Es können Abisoliereinrichtungen mit relativ kompakten Baumaßen realisiert werden, die sich relativ einfach in eine Biegemaschine integrieren lassen.

Bei einer Abisoliereinrichtung mit einem Messer der beschriebenen Art kann die Bewegung zwischen der zurückgezogenen Neutralstellung und der Arbeitsstellung im Eingriff mit dem Flachmaterial durch eine translatorische Bewegung realisiert werden. Bei bevorzugten Varianten ist vorgesehen, dass die Abisoliereinrichtung mindestens eine um eine Drehachse drehbare Messerwelle aufweist, die das Messer trägt, wobei das Messer durch Drehung der Messerwelle um die Drehachse von der Neutralstellung in die Arbeitsstellung und, vorzugsweise in einer entgegengesetzten Richtung, von der Arbeitsstellung in die Neutralstellung bewegbar ist. Durch eine Drehung ist ein schneller Wechsel zwischen Neutralstellung und Arbeitsstellung möglich, wobei gleichzeitig die Position der Schneidkante in Bezug auf das Flachmaterial mit hoher Präzision reproduzierbar vorgegeben werden kann. Dadurch kann unter anderem auf einfache Weise verhindert werden, dass das Messer zu weit in Richtung auf das Trägermaterial zugestellt wird - dadurch könnte die Oberfläche des elektrisch leitenden Trägermaterials durch Materialabtrag verletzt werden - oder zu kurz zugestellt wird - wodurch eventuell eine Ablösung des Isolationsmaterial nur im Inneren des Isolationsmaterials erfolgt, so dass Reste von Isolationsmaterial an der freizulegenden Oberfläche des Trägermaterials haften bleiben könnten.

Die bei Stromschienen und ähnlichen Werkstücken üblicherweise verwendeten Isolationsmaterialien, meist auf Polymerbasis, sind in der Regel relativ zäh, so dass die abgelösten Späne bzw. Abschnitte am abisolierten Flachmaterial verbleiben können, wenn keine besonderen Maßnahmen vorgesehen werden. Bei manchen Ausführungsformen ist an der Messerwelle zusätzlich zu dem Messer (mit welchem die Abisolier-Operation, z.B. die Schäloperation durchgeführt wird) ein weiteres Messer angebracht, das durch Drehung der Messerwelle in einen Arbeitseingriff mit dem Flachmaterial bewegbar ist, in der Weise, dass ein von dem (erstgenannten) Messer abgeschälter Abschnitt des Isolationsmaterials durch das weitere Messer von dem am Trägermaterial verbleibenden Isolationsmaterial abgetrennt werden kann. Bei dieser Variante sind also an dem drehbaren Werkzeugträger (Messerwelle) zwei Messer unterschiedlicher Funktion angebracht, die durch geeignete Drehung der Messerwelle wechselweise in Eingriff mit dem zu bearbeiteten Werkstück (Flachmaterial) gebracht werden können.

Bei Varianten, bei denen das Messer für die Abschäloperation an einer drehbaren Messerwelle angebracht ist, hat es sich als besonders vorteilhaft erwiesen, wenn das Messer ein Schneidkeil mit einer Spanfläche und einer Freifläche aufweist, wobei das Messer so gestaltet und angeordnet ist, dass in der Arbeitsstellung die Freifläche des Schneidkeils im Wesentlichen parallel zur freizulegenden Seitenfläche des Trägermaterials verläuft. In anderen Worten wird also ein Freiwinkel gewählt, der in der Nähe von 0° oder bei 0° liegt. Dadurch kann erreicht werden, dass der "Flugkreis" der Schneidkante, also der Kreis oder Kreisbogen, den die Schneidkante bei Drehung der Messerwelle zurücklegt, tangential zur freizulegenden Seitenfläche des Trägermaterials liegt. Hierdurch können weder beim Einschwenken des Messers in die Arbeitsstellung noch beim Ausschwenken aus der Arbeitsstellung heraus Dellen oder andere Verletzungen an der freizulegenden Oberfläche entstehen.

Eine für das freizulegende Trägermaterial besonders schonende, verletzungsfreie Abisolierung wird bei manchen Ausführungsformen weiterhin dadurch gefördert, dass die Messerwelle in Bezug auf das durchlaufende Flachmaterial derart angeordnet ist, dass eine durch die Schneidkante des Messers und die Drehachse der Messerwelle definierte Ebene im Wesentlichen senkrecht auf der freizulegenden Seitenfläche des Trägermaterials steht, wenn sich das Messer in Arbeitsstellung befindet.

Das hier vorgeschlagene Konzept der Abisolierung von isoliertem Flachmaterial kann in unterschiedlichen Varianten realisiert werden. Es kann Anwendungen geben, bei denen lediglich eine einseitige Abisolierung des Flachmaterials, beispielsweise an einer der breiteren Seitenfläche (Breitseite) gewünscht ist. Dann kann eine einseitige Abisolierung ausreichen. Bei bevorzugten Varianten ist vorgesehen, dass das Flachmaterial gleichzeitig an zwei einander gegenüberliegenden Seiten des Flachmaterials abisoliert wird. Hierzu kann die Abisoliereinrichtung eine erste Messerwelle und eine zweite Messerwelle aufweisen, die um zueinander parallele Drehachsen drehbar sind, wobei zwischen den Messerwellen eine Durchlassöffnung für das abzuisolierende Flachmaterial liegt. Die beiden Messerwellen können gegengleich aufgebaut sein. Der Abstand zwischen den Drehachsen kann stufenlos verstellbar sein.

Bei manchen Varianten sind die beiden Messerwellen über ein Getriebe mechanisch zwangsgekoppelt, in der Weise, dass sie mit Hilfe eines einzigen Antriebs gegenläufig zwischen Arbeitsstellung und Neutralstellung gedreht werden können. Andere Varianten weisen für jede der Messerwellen einen eigenen Antrieb auf. Die Antriebe können über die Steuerung der Biegenmaschine synchronisiert angesteuert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt ein Ausführungsbeispiel einer Biegemaschine für isoliertes Flachmaterial mit einer integrierten Abisoliereinrichtung;
- Fig. 2: zeigt eine isometrische Vorderansicht eines Ausführungsbeispiels einer Abisoliereinrichtung,
- Fig. 3: zeigt eine isometrische Darstellung von zwei gegenläufig drehbaren Messerwellen der Abisoliereinrichtung aus Fig. 2;
- Fig. 4 bis 7: zeigen unterschiedliche Phasen einer Abisolier-Operation mithilfe der Abisoliereinrichtung;
- Fig. 8: zeigt eine Ausführungsform mit einer Abisoliereinrichtung, die eine Abisolierung aller vier Seitenflächen eines Flachmaterials mit Rechteckquerschnitt im Durchlaufverfahren erlaubt; und
- Fig. 9: zeigt eine Ausführungsform einer Abisoliereinrichtung mit zwei separat antreibbaren Messerwellen.

### DETAILLIERTE BESCHREIBUNG DER AUSFÜHRUNGSBEISPIELE

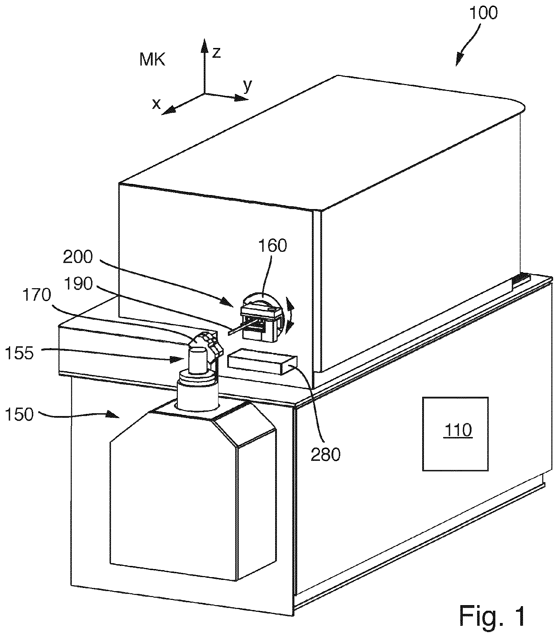

In Fig. 1 ist ein Ausführungsbeispiel einer Biegemaschine 100 zur Herstellung von zweidimensional oder dreidimensional gebogenen Biegeteilen aus isoliertem Flachmaterial gezeigt. Die Biegemaschine hat eine integrierte Abisoliereinrichtung zum Abisolieren von Abschnitten des isolierten Flachmaterials, bevor das fertig gebogene Biegeteil von dem zugeführten Flachmaterial abgetrennt wird. Die Biegemaschine hat ein mit Kleinbuchstaben x, y und z gekennzeichnetes, rechtwinkliges Maschinenkoordinatensystem MK mit einer vertikalen z-Achse und horizontalen x- und y-Achsen. Im dargestellten Beispiel verläuft die x-Achse parallel zu einer Einzugsrichtung, in der das zu biegende Flachmaterial mithilfe einer Einzugseinrichtung 160 einer nachgeschalteten Biegeeinrichtung 150 zugeführt wird. Von den Koordinatenachsen des Maschinenkoordinatensystems sind die später noch erwähnten geregelt angetriebenen Maschinenachsen zu unterscheiden, die mit Großbuchstaben (zum Beispiel A-Achse) bezeichnet werden. Eine Steuerungseinrichtung 110 der Biegemaschine steuert und koordiniert die Arbeitsbewegungen aller Maschinenachsen.

Das umzuformende Ausgangsmaterial, nämlich isoliertes Flachmaterial 190, wird mithilfe einer Einzugseinrichtung durch die Biegemaschine gezogen. Die Einzugseinrichtung dient zum Zuführen von isoliertem Flachmaterial von einem Materialvorrat. Die Vorschubkraft in Einzugsrichtung (x-Richtung) entsteht dabei durch Reibung zwischen Einzugswalzen der Einzugseinrichtung und dem Flachmaterial. Je nach Bauart besitzt die Einzugseinrichtung mehr oder weniger Walzenpaare, beispielsweise drei oder vier Walzenpaare, wobei ein Walzenpaar ein Paar von gegenläufig drehend antreibbaren Einzugswalzen umfasst. Um das Flachmaterial schonend einzuziehen, sind die Einzugswalzen als einfache flache Zylinder, also mit im Wesentlichen kreiszylindrischer Umfangsfläche, gestaltet. Zur Unterstützung der Einzugswalzen befindet sich das Ausgangsmaterial im Beispielsfall in Form eines Coils auf einer motorbetriebenen Haspel. Beginnt die Maschine mit dem Einzug des Flachmaterials, wird ein Sensor angesprochen, der den Motor der Haspel ansteuert.

Bevor das Ausgangsmaterial (isoliertes Flachmaterial) in die Einzugseinrichtung eintritt, passiert das Flachmaterial eine Richteinheit, die im Beispielsfall eine Anzahl von versetzt angeordneten Rollen aufweist.

Für viele Biegeteile werden Biegungen in unterschiedlichen, im Winkel zueinander stehenden Biegeebenen benötigt, so dass die resultierenden Biegeteile dreidimensional gebogen sind. Um dies ohne komplizierten Aufbau der Biegeeinrichtung zu ermöglichen, ist bei der Biegemaschine des Ausführungsbeispiels vorgesehen, dass die Einzugseinrichtung 160 um die Einzugsachse in beiden Drehrichtungen drehbar ist. Dadurch kann auf einfache Weise zwischen einzelnen Biegeoperationen ein Wechsel zwischen Biegeebenen durchgeführt werden. Die Komponenten der Biegeeinrichtung 150 selbst können dann bei einem Wechsel der Biegeebene in ihrer Stellung verbleiben. Beim Ausführungsbeispiel werden die Einzugseinrichtung 160 und die vorgeschaltete Richteinrichtung mithilfe eines Servomotors einer entsprechenden Maschinenachse (A-Achse) gedreht.

Zum Erzeugen von Biegungen an dem Flachmaterial 190 durch Umformung ist eine numerisch gesteuerte Biegeeinrichtung 150 vorgesehen. Im Biegebereich wird das Flachmaterial mithilfe eines CNC-gesteuerten Biegekopfs 155 der Biegeeinrichtung in die gewünschte Form gebogen. Optional kann ein CNC-gesteuerter Auflagetisch vorgesehen sein, um längere Materialabschnitte beim Biegen zu unterstützen. Der Biegekopf des Ausführungsbeispiels besitzt zwei unabhängig voneinander drehbare Wellen, nämlich eine Dornwelle und eine Hohlwelle. An der Dornwelle befinden sich Biegedorne. Je nach Bearbeitungswunsch kann der Biegekopf mit unterschiedlichen Werkzeugen ausgerüstet werden. Große Biegeteile können durch einen nachrüstbaren Auflagetisch unterstützt werden.

Zwischen dem Biegebereich mit dem Biegekopf der Biegeeinrichtung 150 und der Einzugseinrichtung 160 ist eine Schnitteinrichtung 170 montiert, die dafür vorgesehen ist, das fertigte Biegeteil (nach Abschluss aller Biegeoperationen) von dem zugeführten isolierten Flachmaterial abzutrennen. Die Schnitteinrichtung 170 ist so eingerichtet, dass das Flachmaterial über eine Scherbewegung getrennt wird. Durch Rückwärtslaufen des Materialeinzugs ist es möglich, die letzte gefertigte Biegung in Richtung der Schnitteinrichtung 170 heranzuziehen, so dass das Biegeteil dicht nach einer Biegung getrennt werden kann. Bei manchen Varianten ist es möglich, die Schnitteinrichtung mithilfe eines eigenen Antriebs zu verfahren. Das fertig gebogene Biegeteil kann nach Ausführung der Schnittoperation entweder in eine dafür vorgesehene Kiste fallen oder von einer Automation aufgenommen und zum nächsten Arbeitsschritt weitergefördert werden.

Die Schnitteinrichtung kann bei Ausführungsformen mit rotierbarem Einzug ebenfalls rotierbar ausgeführt sein, so dass sich die Schnitteinrichtung mit dem Flachmaterial synchron mitdrehen kann, um optimale Trennschnitte (mit Schnittkräften im Wesentlichen senkrecht zu den Breitseiten des Flachmaterials) zu erhalten.

In Fig. 1 ist die der Biegeeinrichtung 150 zugewandte Stirnseite der Einzugseinrichtung 160 gut zu erkennen. Eine in die Biegemaschine integrierte Abisoliereinrichtung 200 zum Abisolieren von Abschnitten des isolierten Flachmaterials vor Abtrennen des Biegeteils von dem zugeführten Flachmaterial ist an der Stirnseite der Einzugseinrichtung befestigt und kann sich daher mit dieser um die Einzugsrichtung mitdrehen.

Mit der Biegemaschine 100 können unter anderem zweidimensional oder dreidimensional gebogene Stromschienen gefertigt werden, wie sie unter anderem in der Automobilbranche zum Transport elektrischer Energie zwischen Fahrzeugbaugruppen oder innerhalb von Batteriegruppen benötigt werden. Das Ausgangsmaterial ist ein isoliertes Flachmaterial, welches im Wesentlichen aus einem elektrisch leitenden Trägermaterial, einem Haftvermittler auf der Oberfläche des Trägermaterials sowie einer elektrisch isolierenden Isolationsschicht auf dem Haftvermittler besteht. Das Trägermaterial hat in der Regel einen flachen Rechteckquerschnitt mit Breitseiten und senkrecht dazu verlaufenden Schmalseiten. Die Isolationsschicht umhüllt das Trägermaterial vollständig. Das Trägermaterial besteht meist aus Kupfer (Cu) oder Aluminium (Al) bzw. auch Cu oder AI basierenden Legierungen und ist für die Leitung des Stroms zuständig.

Die Breite des Flachmaterials (gemessen in Breitenrichtung senkrecht zur Längsrichtung) kann ein Vielfaches der Dicke (gemessen an den Schmalseiten) betragen, beispielsweise das Dreifache bis Siebenfache. Breiten können z.B. in der Größenordnung einiger Millimeter bis einiger Zentimeter liegen. Die Isolationsschicht hat üblicherweise eine Dicke von weniger als 1 mm.

Die Isolationsschicht wird häufig aus bestimmten Polyamid-Kunststoffen gefertigt. Ein Vorteil von Polyamidschichten ist die Gewichtseinsparung. Dieser Kunststoff gehört zur Familie der Thermoplaste und wird in diesem Fall benötigt, um Kurzschlüsse und Stromschläge zu vermeiden. Polyamid ist sehr widerstandsfähig gegen Verschleiß und weist eine große Zähigkeit sowie hohe Festigkeit auf. Das Material ist beständig gegen viele Lösemittel, Öle und Kraftstoffe und in der Regel für die Einsatztemperatur zwischen -40 °C und 120 °C gut geeignet. Die Isolationsschicht kann z.B. mithilfe eines Haftvermittlers durch Extrudieren auf das Trägermaterial aufgetragen werden. Der Haftvermittler ist vorteilhaft, da ansonsten die Polyamidschicht aufgrund von Streckung bzw. Stauchung an den Biegestellen Welligkeiten aufweisen könnte.

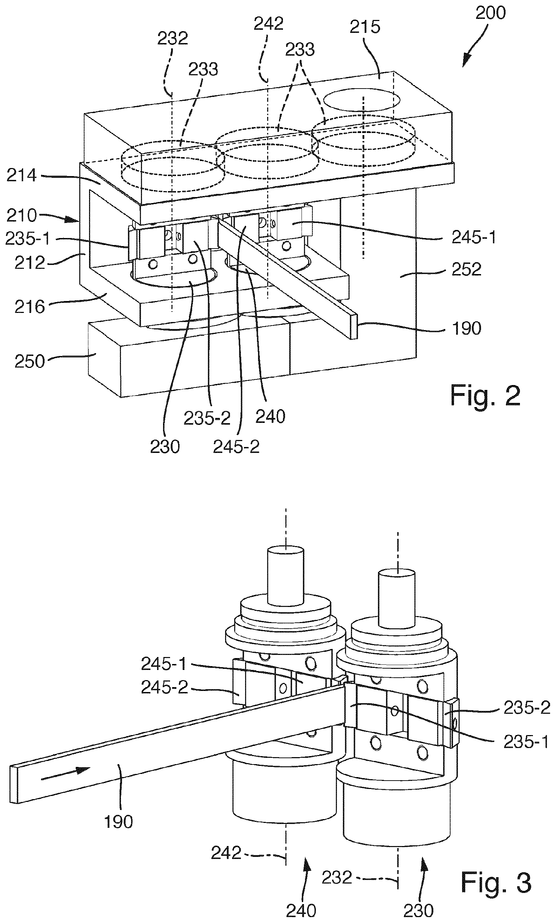

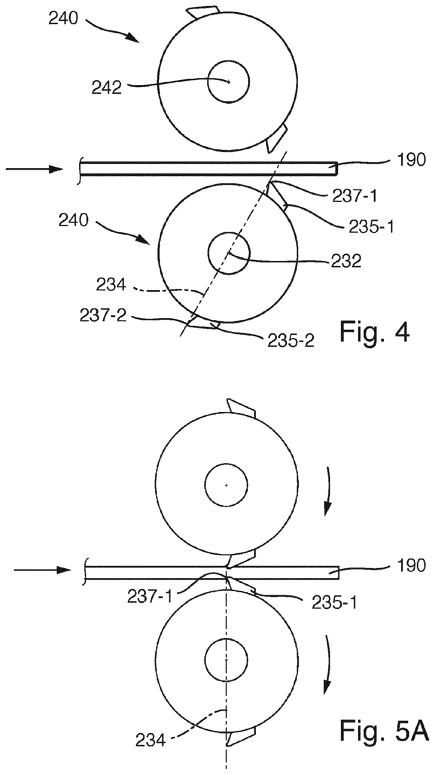

Details des Aufbaus und der Arbeitsweise der Abisoliereinrichtung 200 aus Fig. 1 werden nun anhand der Fig. 2 bis 7 näher erläutert. Dabei zeigt Fig. 2 eine isometrische Vorderansicht der Abisoliereinrichtung 200, Fig. 3 eine isometrische Darstellung von zwei gegenläufig drehbaren Messerwellen der Abisoliereinrichtung und die Fig. 4 bis 7 unterschiedliche Phasen einer Abisolier-Operation mithilfe der Abisoliereinrichtung.

Die Abisoliereinrichtung 200 weist ein annähernd U-förmiges Gehäuse 210 auf, das im Wesentlichen aus winklig zueinander stehenden plattenförmigen Abschnitten besteht und alle funktionalen Komponenten der Abisoliereinrichtung trägt. Ein plattenförmiger Montageabschnitt 212 dient der Befestigung der Abisoliereinrichtung an der Stirnseite der drehbaren Einzugseinrichtung. Die nachrüstbare Abisoliereinrichtung 200 kann dort mithilfe von Befestigungsschrauben angeschraubt und bei Bedarf leicht entfernt werden. Ein rechtwinklig zum Montageabschnitt stehender oberer Trägerabschnitt 214 trägt an seiner Oberseite einen Deckel 215, welcher später noch erläuterte Getriebeteile (z.B. Stirnzahnräder) abdeckt. Parallel zum oberen Trägerabschnitt 214 gibt es einen unteren Trägerabschnitt 216, der mit Abstand zum oberen Trägerabschnitt parallel zu diesem angeordnet ist.

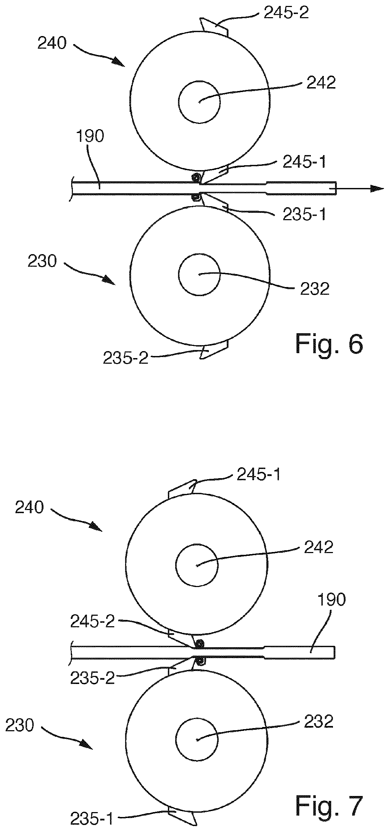

Die Abisoliereinrichtung 200 weist zwei achsparallel und gegenläufig drehbare Messerwellen 230, 240 mit jeweils zwei Messern auf. Diese sind in der Vorderansicht von Fig. 2 in einer Drehstellung gezeigt, die von den Messerwellen beim Abtrennen eines Spans aus Isolationsmaterial am Ende einer Abisolier-Operation einnehmen (vgl. Fig. 7). In Fig. 3 sind die Messerwellen in ihrer Arbeitsstellung während der Abisolier-Operation gezeigt. Dabei wird das Flachmaterial 190 von der Einzugseinrichtung kommend entlang der Pfeilrichtung (Vorschubrichtung bzw. Einzugsrichtung) fortbewegt. In Fig. 3 schaut man somit auf die der Einzugseinrichtung zugewandte Rückseite der Abisoliereinrichtung.

Eine erste Messerwelle 230 ist mit oberen und unteren Zapfen in den oberen und unteren Trägerabschnitten des Gehäuses 210 so gelagert, dass sie um die Drehachse 232 drehbar ist. Die erste Messerwelle 230 trägt ein erstes Messer 235-1 und ein zweites Messer 235-2 an einander gegenüberliegenden Seiten. Die zweite Messerwelle 240 ist achsparallel zur ersten Messerwelle um eine Drehachse 242 drehbar und trägt an einander gegenüberliegenden Seiten ein erstes Messer 245-1 und ein zweites Messer 245-2. Die Messerwellen sind mittels stirnseitiger Zapfen im oberen Trägerabschnitt bzw. unteren Trägerabschnitt drehbar gelagert. Die in dem Bereich des Gehäusedeckels 215 hineinragenden oberen Zapfen sind über Zahnräder 233 eines Getriebes so zwangsgekoppelt, dass sich die Messerwellen nur gegenläufig synchron zueinander bewegen können. Die Drehbewegung der Messerwellen wird über einen einzigen Antrieb mit einem Servomotor 250 bewirkt, der über ein Getriebe 252 und weitere Übertragelemente mit den an den Messerwellen befestigten Zahnrädern zur Übertragung von Drehbewegungen gekoppelt ist. Der Motor und das winklig dazu stehende Getriebe 252 sind an der oberen Trägerplatte 214 des Gehäuses befestigt, der Motor selbst ist unterhalb der Messerwellen angeordnet. Es ergibt sich insgesamt eine äußerst kompakte Bauform. Der Servomotor wird über die Steuereinrichtung 110 gesteuert.

Fig. 4 zeigt eine Ansicht der beiden Messerwellen 230, 240 von oben. Das Flachmaterial 190 wird mittels der Einzugseinrichtung von links (in Pfeilrichtung) zugeführt. Bei der Situation in Fig. 4 ist die Abisoliereinrichtung in eine Durchlaufkonfiguration geschaltet, in welcher das Flachmaterial in Richtung Biegekopf ohne Kontakt zu Messern der Abisoliereinrichtung durchlaufen kann. Keines der Messer befindet sich in Eingriff mit dem Flachmaterial.

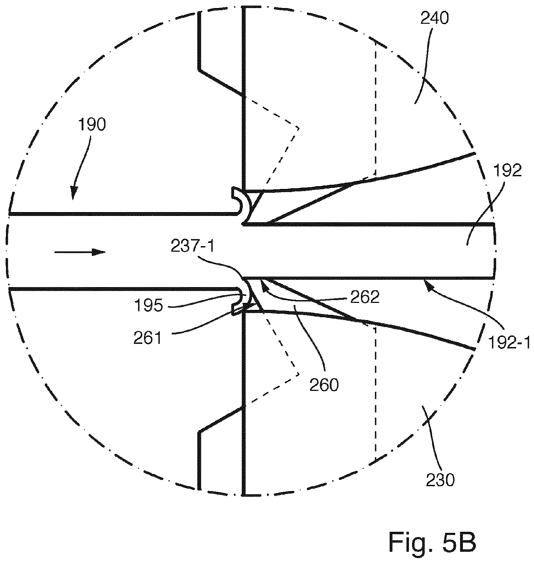

Wenn beim Vorschub des isolierten Flachmaterials ein abzuisolierender Abschnitt in dem Bereich der Abisoliereinrichtung 200 gelangt, sendet die Steuereinrichtung der Biegemaschine ein entsprechendes Signal an den Antrieb der Abisoliereinrichtung. In Reaktion auf das Signal werden die Messerwellen mittels des Motors 250 aus der in Fig. 4 gezeigten Neutralstellung in die in Fig. 5A gezeigte Arbeitsstellung gedreht. Fig. 5B zeigt diese Situation (erste Messer in Arbeitsstellung) mit weiteren Details.

Anhand der ersten Messerwelle 230 wird die Geometrie der Anordnung im Detail erläutert. Das erste Messer 235-1 und das zweite Messer 235-2 sind identisch gestaltet. Die Messer haben jedoch unterschiedliche Funktionen. Jedes der Messer hat einen Schneidkeil, an welchem eine gerade Schneidkante 237-1 bzw. 237-2 ausgebildet ist. Bei richtiger Justierung der Messer verlaufen die Schneidkanten parallel zur Drehachse der Messerwelle. Beide Messer befinden sich auf der gleichen Seite einer Radialebene 234, die durch die Drehachse 232 der Messerwelle sowie durch die Schneidkanten 237-1 bzw. 237-2 der gegenüberliegenden Messer verläuft.

Als Schneidkeil (siehe Fig. 5B) wird hier der an der Spanerzeugung beteiligte Bereich des Messers verstanden. Der Schneidkeil 260 wird von einer Spanfläche 261 und einer Freifläche 262 begrenzt. Die Spanfläche kann unmittelbar mit dem abgespanten Span (der aus Isolationsmaterial besteht) in Berührung kommen. Die Spanfläche ist also diejenige Fläche am Schneidkeil, auf der der Span aufläuft. Die Fläche am Schneidkeil, die der entstehenden freigelegten Fläche am Werkstück (Flachmaterial) gegenüberliegt, ist die Freifläche 262. Die Linie, an der die Spanfläche und die Freifläche einander berühren, ist die Schneidkante 237-1. Als Spanwinkel wird der Winkel zwischen einer zur Bearbeitungsfläche des zu bearbeitenden Werkstücks senkrecht stehend gedachten Linie und der Spanfläche an der Schneidkante bezeichnet. Der Keilwinkel ist der Winkel zwischen der Spanfläche und der Freifläche. Der Freiwinkel ist der Winkel zwischen der freizulegenden Fläche des Werkstücks und der Freifläche.

Die Anordnung ist hier so getroffen, dass die beiden Schneidkanten der einander gegenüberliegenden Messer auf einem gemeinsamen Kreis liegen und dass die Freiflächen jeweils als Ausschnitt einer Tangentialebene an den Kreis angesehen werden können. Die Freiflächen stehen dabei senkrecht auf der die Drehachse enthaltenden Radialebene 234. Die Freiwinkel beider Messer betragen jeweils 0°. Dies wirkt sich äußerst positiv auf den Abisolierprozess und auf die Qualität der freizulegenden Oberfläche des Trägermaterials aus, was anhand von Fig. 5 näher erläutert wird.

In der in Fig. 5A und 5B gezeigten Arbeitsstellung liegt die Schneidkante 237-1 des ersten Messers derart in der Nähe der freizulegenden Seitenfläche 192-1 des Trägermaterials 192, dass ein von dem Messer erfasster Teil der Isolationsschicht bei der Fortbewegung des Flachmaterials relativ zum Messer als Span 195 vom Trägermaterial entfernt bzw. abgeschält wird. Die Schneidkante 237-1 ist länger als die Breite der freizulegenden Seitenfläche und überragt diese an beiden Enden etwas. Somit kann die komplette Seitenfläche 192-1 in einem einzigen Durchgang auf gesamter Breite abisoliert werden.

Fig. 5A zeigt die Situation kurz nach Einschwenken bzw. Eindrehen der Messerwellen in die Arbeitsstellung. Im vergrößerten Detail (Fig. 5B) ist ersichtlich, dass die Schneidkante des ersten Messers auf Ebene der breiten Seitenfläche 192-1 des Flachmaterials liegt. Die Freifläche 262 verläuft parallel zur freizulegenden Seitenfläche und gleitet auf dieser ab. Der vom Trägermaterial abgehobene Span 195 des Isolationsmaterials rollt sich an der Spanfläche auf.

Aufgrund der Förderung des Flachmaterials durch die Biegemaschine bzw. die Abisoliereinrichtung 200 gleiten die Freiflächen der einander gegenüberliegenden ersten Messer auf dem Trägermaterial ab und es kann im Durchlauf abisoliert werden, ohne dass das Flachmaterial vorher vom zugeführten Flachmaterial abgetrennt wird.

Fig. 6 zeigt eine zeitlich nachfolgende Situation, bei der nach Vorschub des Flachmaterials durch die stehenden Messer ein etwas längerer Span 195 des Isolationsmaterials bereits vom Trägermaterial abgelöst ist. Der Span rollt sich mehr oder weniger stark im Bereich der Spanfläche zusammen. Der Span bleibt aufgrund der Zähigkeit des plastisch verformbaren Isolationsmaterials am Stück erhalten.

Um den entstandenen Span aus Isolationsmaterial vollständig vom teilweise abisolierten Werkstück (Flachmaterial) zu lösen, werden die beiden Messerwellen mittels des Motors 250 in entgegengesetzte Richtung synchron um 180° gedreht. Wie in Fig. 7 gut zu erkennen ist, gelangen dadurch die zweiten Messer 235-2, 245-1, zeitgleich in Arbeitseingriff mit dem Werkstück und trennen die auf beiden Seiten aufgerollten Späne zuverlässig vom abisolierten Flachmaterial ab. Wie erwähnt, haben die zweiten Messer den gleichen Eintauchradius wie die ersten Messer, so dass der Span vollständig abgetrennt werden kann, ohne das freigelegte Trägermaterial zu verletzen. Die abfallenden Späne können in einen Aufsammelbehälter 280 fallen und müssen nicht abgesaugt werden.

Je nach Bearbeitung kann das Flachmaterial zweidimensional oder dreidimensional gebogen werden. Dazu kann das Flachmaterial mittels der drehbaren Einzugseinrichtung 160 um seine Längsachse gedreht werden. Da die Abisoliereinrichtung 200 fest an der Einzugseinrichtung montiert ist, dreht sich die Abisoliereinrichtung mit dem Flachmaterial synchron mit, so dass die Abisoliereinrichtung auch bei Drehung des Flachmaterials nicht für die Bearbeitung neu positioniert werden muss.

Es sei noch erwähnt, dass die Abisoliereinrichtung 200 ersichtlich für eine zweiseitige Bearbeitung vorgesehen ist, bei der das Flachmaterial gleichzeitig an zwei gegenüberliegenden Seiten des Flachmaterials (hier den Breitseiten) abisoliert wird. Eine parallele Bearbeitung an gegenüberliegenden Seitenflächen dient auch der Kräfteaufhebung, so dass keine gesonderten Gegenlager vorgesehen werden müssen. Es wäre auch möglich, eine Abisoliereinheit so zu konfigurieren, dass nur eine einseitige Abisolierung erfolgt. Hierzu könnte eine der Messerwellen durch einen entsprechenden Gegenhalter, beispielsweise in Form einer Rolle oder dergleichen, ersetzt werden, um beim Eingriff des ersten Messers der Messerwelle ein Ausweichen des Flachmaterials zu unterbinden und so das Flachmaterial beim Abisolieren zu führen.

Anhand der Figuren ist erläutert, auf welche Weise zwei gegenüberliegende Seitenflächen, z.B. die Breitseiten, des Flachmaterials, zeitgleich an einen beliebigen Abschnitt auf beliebige Länge abisoliert werden können. Auf analoge Weise können natürlich auch einander gegenüberliegende Schmalseiten abisoliert werden. Es wäre auch möglich, für die schmalen Seiten des Flachmaterials zwei Messer senkrecht zu stellen und somit das Isolationsmaterial vom durchlaufenden Flachmaterial durch Schaben zu entfernen.

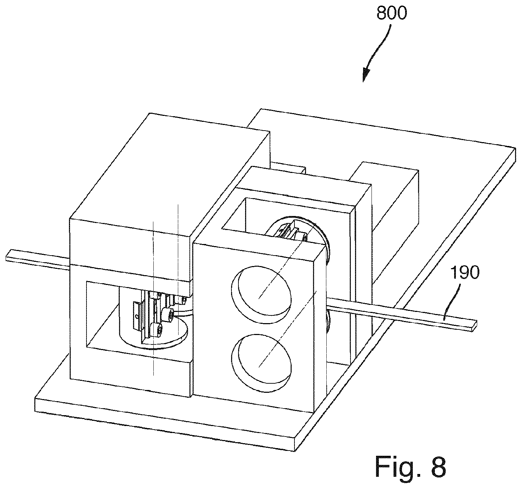

Es ist auch möglich, zusätzlich zu einer ersten Abisoliereinrichtung (zum Abisolieren gegenüberliegender Breitseiten) noch eine zusätzliche Abisoliereinrichtung um 90° versetzt anzubringen, um sowohl Breitseiten als auch Schmalseiten des Flachmaterials im Durchlaufverfahren abzuisolieren. Dadurch entsteht wieder eine Abisoliereinrichtung. Fig. 8 zeigt eine Variante einer Abisoliereinrichtung 800 mit zwei hintereinander geschalteten Paaren von Messerwellen mit unterschiedlichen Arbeitsabständen zwischen den Messerschneiden.

Die Biegemaschine mit integrierter Abisoliereinrichtung kann wie folgt arbeiten. Zunächst wird das abzuisolierende Flachmaterial mittels der Einzugseinrichtung vorgeschoben, bis der Beginn eines abzuisolierenden Abschnitts in die Ebene gelangt, die durch die Drehachsen 232, 242 der Messerwellen definiert wird. In dieser Phase befinden sich die Messer in Durchlassstellung (vgl. Fig. 4). Dann wird der Einzug gestoppt. Durch Drehen der Messerwellen werden die ersten Messer 235-1, 245-1 zeitgleich in Arbeitseingriff gebracht und tauchen dabei durch die Isolationsschicht bis auf Höhe der freizulegenden Flächen des Trägermaterials ein (vgl. Fig. 5A). Dann wird das Flachmaterial über die Einzugseinrichtung weiter befördert. Dabei findet der eigentliche Abisoliervorgang statt (vgl. Fig. 6). Nach einer vorgebbaren Länge des Vorschubs, wenn das Ende des abzuisolierenden Abschnitts erreicht ist, stoppt der Einzug. Danach werden die Messerwellen um 180° gegen die Eintauchrichtung gedreht und dadurch gelangen die zweiten Messer in Eingriff mit dem Isoliermaterial und trennen die Späne ab (vgl. Fig. 7). Die Späne fallen in einen Auffangbehälter. Zum Freigeben des Flachmaterials vor der Weiterbeförderung werden die Messerwellen in eine Neutralstellung, beispielsweise um 90°, gedreht.

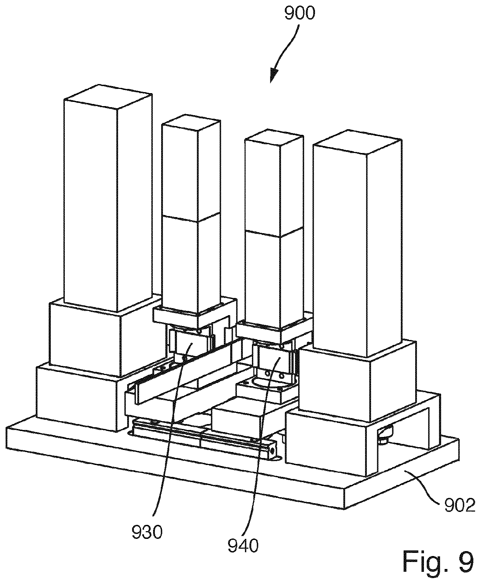

Anhand von Fig. 9 wird ein anderes Ausführungsbeispiel einer Abisoliereinrichtung 900 erläutert. Diese ist nicht für eine Montage an der Einzugseinrichtung vorgesehen, sondern für einen Einbau in den Bauraum zwischen der Einzugseinrichtung und der nachfolgenden Schnitteinrichtung. Die Abisoliereinrichtung hat ein Gestell 902, dessen plattenförmiges Unterteil am Maschinenbett der Maschine befestigt wird. Das Unterteil trägt alle funktionellen Komponenten der Abisoliereinrichtung. Unter anderem kann an seine Unterseite eine Auffangschale für abgetrennte Späne aus Isolationsmaterial vorgesehen sein. Ähnlich wie das Ausführungsbeispiel der Figuren 1 bis 7 hat die Abisoliereinrichtung zwei achsparallel drehbare Messerwellen 930 und 940 mit jeweils einem Paar von Messern (erste und zweite Messer) mit geraden Schneidkanten. Die Rotationsbewegungen der Messerwellen für den Wechsel zwischen den einzelnen Stellungen (Arbeitsstellung zum Abisolieren, Stellung zum Spanabtrennen, Neutralstellung) werden jeweils über einen eigenen Servomotor mit Getriebe erzeugt. Die Synchronisation der Bewegungen erfolgt softwaregesteuert.

Jede der Messerwellen ist in einem eigenen U-förmigen Profil gelagert, das auf einer Lineareinheit montiert ist. Mit Hilfe der Lineareinheiten kann der Abstand zwischen den Drehachsen der Messerwellen (bzw. der lichte Arbeitsabstand zwischen den Schneidkanten der Messer in deren Arbeitsstellung) stufenlos verstellt werden. Für jede Messerwelle gibt es ein Messer, das über eine Nut-Federverbindung mittig an der Welle platziert und montiert wird. Die Zustellung und Nachjustierung erfolgt über einen Kurbelantrieb. Aufgefangen werden die Späne über eine integrierte Schublade (Auffangschale) im Gestell.

Bei dieser Variante wird das abzuisolierende Flachmaterial zunächst an der vorgesehenen Abisolierstelle gestoppt und dann im Winkel positioniert. Dann werden die Messerwellen zugestellt. Anschließend tauchen die Messerwellen ein, d.h. sie werden in ihre Arbeitsstellung gedreht. Dies kann automatisch oder manuell realisiert werden. Für den eigentlichen Abisoliervorgang (die Abisolier-Operation) wird das Flachmaterial dann mittels der Einzugseinrichtung weiter befördert. Der Einzug stoppt nach vorgegebener Länge. Dann drehen sich die Messerwellen um 180° gegen die Eintauchrichtung, wodurch der Span aus Isolationsmaterial abgetrennt wird und in die Auffangschale fällt. Danach drehen sich die Messerwellen beispielsweise um 90° zurück in ihre Neutralstellung. Die Zustellung wird dann zurückgefahren.

Auf diese Weise werden beispielsweise die beiden gegenüberliegenden Breitseiten des Flachmaterials abisoliert. Wenn auch die Schmalseiten abisoliert werden sollen, so würde das Flachmaterial mit Hilfe der Einzugseinrichtung so zurückbefördert, dass der Beginn des abzuisolierenden Abschnitts wieder im Bereich der Messerwellen liegt. Der Einzug wird für die Abisolierung der Schmalkanten um 90° gedreht. Dann wiederholen sich die oben beschriebenen Schritte zum Abisolieren der Schmalseiten. Danach wird das Flachmaterial durch Zurückfahren der Messer freigegeben und kann weiter befördert werden.

Diese Variante einer Abisoliereinrichtung ist aufgrund der Möglichkeit der Abstandsveränderung zwischen den Drehachsen der Messerwellen besonders flexibel und kann auch komfortabler sein, insbesondere wenn der Abstand automatisch mittels eines Servomotors eingestellt wird. Die Variante ist für alle Flachmaterialgrößen ohne Umrüstung geeignet. Ein eventueller Messerverschleiß kann durch die Möglichkeit der Abstandsveränderung zwischen den Drehachsen der Messerwellen automatisch kompensiert werden. Die geschlossene Auffangschale soll für eine bequeme, rückstandsfreie Entsorgung der Isolationsmaterial-Späne sorgen.

## Patentansprüche

1. Verfahren zur Herstellung eines Biegeteils aus isoliertem Flachmaterial, das ein flaches elektrisch leitendes Trägermaterial aufweist, welches von einer elektrisch isolierenden Isolationsschicht umhüllt ist, wobei
das isolierte Flachmaterial (190) von einem Materialvorrat einer Biegemaschine (100) zugeführt wird,
in der Biegemaschine zu einem zwei- oder dreidimensional gebogenen Biegeteil aus isoliertem Flachmaterial umgeformt wird,
das Biegeteil in einer Schnittoperation von dem zugeführten isolierten Flachmaterial abgetrennt wird und
in mindestens einem Abschnitt des isolierten Flachmaterials ein Teil der Isolationsschicht in einer Abisolier-Operation von dem elektrisch leitenden Trägermaterial entfernt wird,
**dadurch gekennzeichnet, dass**
die Abisolier-Operation vor dem Abtrennen des Biegeteils von dem zugeführten Flachmaterial an dem in der Biegemaschine geführten Flachmaterial mittels einer in die Biegemaschine integrierten Abisoliereinrichtung (200) im Durchlaufverfahren an dem durch die Abisoliereinrichtung durchlaufenden Flachmaterial durchgeführt wird.

2. Verfahren nach Anspruch 1, **dadurch gekennzeichnet, dass** bei dem Durchlaufverfahren eine Vorschubbewegung des Flachmaterials (190) in Durchlaufrichtung durch Ansteuerung einer Einzugseinrichtung (160) und/oder durch Arbeitsbewegungen einer Biegeeinrichtung (150) der Biegemaschine (100) vorgegeben wird, wobei vorzugsweise die Abisolier-Operation mit einer statisch angeordneten Abisoliereinrichtung (200) durchgeführt wird.

3. Verfahren nach Anspruch 1 oder 2, **dadurch gekennzeichnet, dass** die Abisolier-Operation mittels der Abisoliereinrichtung (200) unter der Steuerung durch eine Steuereinrichtung (110) der Biegemaschine (100) durchgeführt wird.

4. Verfahren nach Anspruch 1, 2 oder 3, **dadurch gekennzeichnet, dass** das abzuisolierende Flachmaterial (190) während der Abisolier-Operation an beiden Seiten eines abzuisolierenden Abschnitts durch steuerbare Einrichtungen der Biegemaschine, insbesondere durch eine Einzugseinrichtung (160) und eine Biegeeinrichtung (150), geführt und/oder gehalten wird.

5. Verfahren nach einem der vorhergehenden Ansprüche, **dadurch gekennzeichnet, dass** die Isolationsschicht an mindestens einer Seitenfläche des Flachmaterials mittels eines Messers (235-1, 245-1) mit einer geraden Schneidkante (237-1) entfernt wird, die in einer Arbeitsstellung des Messers derart in der Nähe einer freizulegenden Seitenfläche (192-1) des Trägermaterials angeordnet wird, dass ein von dem Messer erfasster Teil der Isolationsschicht bei Fortbewegung des Flachmaterials relativ zu dem Messer von dem Trägermaterial entfernt wird, wobei vorzugsweise das in die Arbeitsstellung gebrachte Messer während der Abisolier-Operation ruht und die zum Entfernen der Isolationsschicht erforderliche Relativbewegung zwischen dem Messer und dem Flachmaterial ausschließlich durch die Bewegung des Flachmaterials in einer Durchlaufrichtung bewirkt wird.

6. Verfahren nach einem der vorhergehenden Ansprüche, **dadurch gekennzeichnet, dass** das Flachmaterial gleichzeitig an mindestens zwei gegenüberliegenden Seiten des Flachmaterials abisoliert wird.

7. System zur Herstellung von Biegeteilen aus isoliertem Flachmaterial mit einer Biegemaschine (100) zum Biegen von isoliertem Flachmaterial (190) und einer Abisoliereinrichtung zum Abisolieren von Abschnitten des isolierten Flachmaterials, wobei die Biegemaschine eine Einzugseinrichtung (160) zum Einziehen von isoliertem Flachmaterial von einem Materialvorrat, eine Biegeeinrichtung (150) mit einem Biegekopf zum Biegen des isolierten Flachmaterials zu einem zwei- oder dreidimensional gebogenen Biegeteil aus isoliertem Flachmaterial sowie eine Schnitteinrichtung (170) zum Abtrennen des Biegeteils von dem zugeführten isolierten Flachmaterial aufweist,
**dadurch gekennzeichnet, dass**
die Biegemaschine eine integrierte Abisoliereinrichtung (200) zum Abisolieren von Abschnitten des isolierten Flachmaterials (190) im Durchlaufverfahren an dem durch die Abisoliereinrichtung durchlaufenden Flachmaterial vor Abtrennen des Biegeteils von dem zugeführten Flachmaterial aufweist.

8. System nach Anspruch 7, **dadurch gekennzeichnet, dass** die Abisoliereinrichtung (200) an eine Steuereinrichtung (110) der Biegemaschine (100) angeschlossen ist und dass die Abisolier-Operation mittels der Abisoliereinrichtung unter der Steuerung durch die Steuereinrichtung durchführbar ist.

9. System nach Anspruch 7 oder 8, **dadurch gekennzeichnet, dass** die Abisoliereinrichtung (200) statisch und/oder zwischen der Einzugseinrichtung (160) und einem Biegekopf (155) der Biegeeinrichtung (150) angeordnet ist.

10. System nach einem der Ansprüche 7 bis 9, **dadurch gekennzeichnet, dass** die Einzugseinrichtung (160) um eine Einzugsachse drehbar ist und dass die Abisoliereinrichtung (200) an der Einzugseinrichtung befestigt und mit der Einzugseinrichtung um die Einzugsrichtung drehbar ist.

11. System nach einem der Ansprüche 7 bis 10, **dadurch gekennzeichnet, dass** die Abisoliereinrichtung mindestens ein Messer (235-1, 245-1) mit einer geraden Schneidkante (237-1) aufweist, wobei das Messer zwischen einer Neutralstellung ohne Eingriff des Messers an dem isolierten Flachmaterial (190) und einer Arbeitsstellung bewegbar ist, in der die Schneidkante des Messers derart in der Nähe einer freizulegenden Seitenfläche (192-1) des Trägermaterials angeordnet ist, dass ein von dem Messer erfasster Teil der Isolationsschicht bei Fortbewegung des Flachmaterials relativ zum Messer von dem Trägermaterial entfernt wird.

12. System nach einem der Ansprüche 7 bis 10, **dadurch gekennzeichnet, dass** die die Abisoliereinrichtung (200) mindestens eine um eine Drehachse (232, 242) drehbare Messerwelle (230, 240) aufweist, die ein Messer (235-1, 245-1) mit einer geraden Schneidkante (237-1) trägt, wobei das Messer durch Drehung der Messerwelle um die Drehachse von einer Neutralstellung in eine Arbeitsstellung und, vorzugsweise in einer entgegengesetzten Richtung, von der Arbeitsstellung in die Neutralstellung bewegbar ist, wobei vorzugsweise an der Messerwelle (230, 240) zusätzlich zu dem Messer (235-1, 245-1) ein weiteres Messer (235-2, 245-2) angebracht ist, das durch Drehung der Messerwelle in einen Arbeitseingriff mit dem Flachmaterial bewegbar ist in der Weise, dass ein von dem Messer abgeschälter Abschnitt des Isolationsmaterials durch das weitere Messer von dem am Trägermaterial verbleibende Isolationsmaterial abtrennbar ist.

13. System nach einem der Ansprüche 11 oder 12, **dadurch gekennzeichnet, dass** das Messer (235-1, 245-1) einen Schneidkeil (260) mit einer Spanfläche (261) und einer Freifläche (262) aufweist, wobei das Messer derart gestaltet und angeordnet ist, dass in der Arbeitsstellung die Freifläche im Wesentlichen parallel zu der freizulegenden Seitenfläche (192-1) des Trägermaterials verläuft.

14. System nach einem der Ansprüche 12 bis 13, **dadurch gekennzeichnet, dass** die Messerwelle (230) in Bezug auf das durchlaufende Flachmaterial (190) derart angeordnet ist, dass eine durch die Schneidkante (237-1) des Messers und die Drehachse (232) der Messerwelle (230) definierte Radialebene (234) im Wesentlichen senkrecht auf der freizulegenden Seitenfläche (192-1) des Trägermaterials steht, wenn sich das Messer in der Arbeitsstellung befindet.

15. System nach einem der Ansprüche 12 bis 14, **dadurch gekennzeichnet, dass** die Abisoliereinrichtung eine erste Messerwelle (230) und eine zweite Messerwelle (240) aufweist, die um zueinander parallele Drehachsen (232, 242) drehbar sind, wobei zwischen den Messerwellen eine Durchlassöffnung für das abzuisolierende Flachmaterial liegt, wobei vorzugsweise ein Abstand zwischen den Drehachsen (232, 242) der Messerwellen (230, 240) stufenlos verstellbar ist.

## Claims

1. Method for producing a bent part from insulated flat material which has a flat electrically conducting carrier material which is sheathed by an electrically insulating insulation layer, wherein
the insulated flat material (190) is fed from a material supply to a bending machine (100),
in the bending machine is formed to a two-dimensionally or three-dimensionally bent part bent from insulated flat material,
the bent part in a cutting operation is severed from the fed insulated flat material, and
in at least one portion of the insulated flat material, a part of the insulation layer is removed from the electrically conducting carrier material in an insulation-stripping operation,
**characterized in that**
the insulation-stripping operation is carried out prior to the severing of the bent part from the fed flat material on the flat material guided in the bending machine by means of an insulation-stripping installation (200) that is integrated in the bending machine by a continuous method on the flat material running through the insulation-stripping installation.

2. Method according to claim 1, **characterized in that**, in the continuous method, an infeed movement of the flat material (190) in the running direction is predefined by actuating a drawing-in installation (160) and/or by operative movements of a bending installation (150) of the bending machine (100), wherein the insulation-stripping operation is preferably carried out by way of an insultation-stripping installation (200) that is disposed so as to be static.

3. Method according to claim 1 or 2, **characterized in that** the insulation-stripping operation by means of the insulation-stripping installation (200) is carried out under the control of a control installation (110) of the bending machine (100).

4. Method according to claim 1, 2 or 3, **characterized in that** the flat material (190) to be stripped of the insulation during the insulation-stripping operation on both sides of a portion to be stripped of the insulation is guided through and/or held by controllable installations of the bending machine, in particular by a drawing-in installation (160) and a bending installation (150).

5. Method according to any of the preceding claims, **characterized in that** the insulation layer is removed on at least one lateral face of the flat material by means of a knife (235-1, 245-1) having a straight cutting edge (237-1), said straight cutting edge in an operating position of the knife being disposed close to a lateral face (192-1) of the carrier material to be exposed in such a manner that a part of the insulation layer that is acquired by the knife is removed from the carrier material in the continuing movement of the flat material relative to the knife, wherein preferably the knife moved to the operating position rests during the insulation-stripping operation, and the relative movement between the knife and the flat material required for the removal of the insulation layer is caused exclusively by the movement of the flat material in a running direction.

6. Method according to any of the preceding claims, **characterized in that** the flat material is contemporaneously stripped of the insulation on at least two opposite sides of the flat material.

7. System for producing bent parts from insulated flat material, having a bending machine (100) for bending insulated flat material (190) and an insulation-stripping installation for stripping the insulation from portions of the insulated flat material,
wherein the bending machine has a drawing-in installation (160) for drawing-in insulated flat material from a material supply, a bending installation (150) having a bending head for bending the insulated flat material to a two-dimensional or three-dimensional bent part bent from insulated material, as well as a cutting installation (170) for severing the bent part from the fed insulated flat material,
**characterized in that**
the bending machine has an integrated insulation-stripping installation (200) for stripping the insulation of portions of the insulated flat material (190) by the continuous method on the flat material running through the insulation-stripping installation prior to the severing of the bent part from the fed flat material.

8. System according to claim 7, **characterized in that** the insulation-stripping installation (200) is connected to a control installation (110) of the bending machine (100), and **in that** the insulation-stripping operation is capable of being carried out by means of the insulation-stripping installation under the control of the control installation.

9. System according to claim 7 or 8, **characterized in that** the insulation-stripping installation (200) is disposed so as to be static and/or between the drawing-in installation (160) and a bending head (155) of the bending installation (150).

10. System according to any of claims 7 to 9, **characterized in that** the drawing-in installation (160) is rotatable about a drawing-in axis, and **in that** the insulation-stripping installation (200) is fastened to the drawing-in installation and, conjointly with the drawing-in installation, is rotatable about the drawing-in direction.

11. System according to any of claims 7 to 10, **characterized in that** the insulation-stripping installation has at least one knife (235-1, 245-1) having a straight cutting edge (237-1), wherein the knife is movable between a neutral position without an engagement of the knife on the insulated flat material (190) and an operating position in which the cutting edge of the knife is disposed close to a lateral face (192-1) of the carrier material to be exposed in such a manner that a part of the insulation layer that is acquired by the knife is removed from the carrier material in the continuing movement of the flat material relative to the knife.

12. System according to any of claims 7 to 10, **characterized in that** the insulation-stripping installation (200) has at least one knife shaft (230, 240) which is rotatable about a rotation axis (232, 242) and which supports a knife (235-1, 245-1) having a straight cutting edge (237-1), wherein the knife by the rotation of the knife shaft about the rotation axis is movable from a neutral position to an operating position and, preferably in an opposing direction, from the operating position to the neutral position, wherein preferably, in addition to the knife (235-1, 245-1), a further knife (235-2, 245-2) is attached to the knife shaft (230, 240), said further knife (235-2, 245-2) by the rotation of the knife shaft being movable so as to operatively engage with the flat material in the manner that a portion of the insulation material that is peeled off by the knife is capable of being severed from the insulation material remaining on the carrier material by the further knife.

13. System according to claim 11 or 12, **characterized in that** the knife (235-1, 245-1) has a cutting wedge (260) having a cutting face (261) and a tool flank (262), wherein the knife is designed and disposed in such a manner that the tool flank in the operating position runs so as to be substantially parallel to the lateral face (192-1) of the carrier material to be exposed.

14. System according to any of claims 12 to 13, **characterized in that** the knife shaft (230) in relation to the flat material (190) running through is disposed in such a manner that a radial plane (234) defined by the cutting edge (237-1) of the knife and the rotation axis (232) of the knife shaft (230) lies so as to be substantially perpendicular on the lateral face (192-1) of the carrier material to be exposed when the knife is situated in the operating position.

15. System according to any of claims 12 to 14, **characterized in that** the insulation-stripping installation has a first knife shaft (230) and a second knife shaft (240) which are rotatable about mutually parallel rotation axes (232, 242), wherein a passage opening for the flat material to be stripped of the insulation lies between the knife shafts, wherein preferably a spacing between the rotation axes (232, 242) of the knife shafts (230, 240) is adjustable in a stepless manner.

## Revendications

1. Procédé de fabrication d'une pièce cintrée en matériau plat isolé qui comporte un matériau porteur plat électriquement conducteur qui est enveloppé d'une couche d'isolation électriquement isolante,
le matériau plat isolé (190) étant amené d'une réserve de matériau à une machine à cintrer (100),
une opération de formage étant effectuée dans la machine à cintrer pour obtenir une pièce cintrée en matériau plat isolé pliée en deux ou trois dimensions,
la pièce cintrée étant séparée du matériau plat isolé amené lors d'une opération de découpe et une partie de la couche d'isolation étant retirée du matériau porteur électriquement conducteur dans au moins une portion du matériau plat isolé lors d'une opération de dénudage,
**caractérisé en ce que**
l'opération de dénudage est effectuée en continu sur le matériau plat traversant le dispositif de dénudage à l'aide d'un dispositif de dénudage (200) intégré dans la machine à cintrer avant que la pièce cintrée ne soit séparée du matériau plat amené.

2. Procédé selon la revendication 1, **caractérisé en ce qu'**un mouvement d'avancement du matériau plat (190) dans le sens de défilement est spécifié en continu par la commande d'un dispositif d'alimentation (160) et/ou par des mouvements de travail d'un dispositif de cintrage (150) de la machine à cintrer (100), l'opération de dénudage étant de préférence effectuée à l'aide d'un dispositif de dénudage (200) disposé de manière statique.

3. Procédé selon la revendication 1 ou 2, **caractérisé en ce que** l'opération de dénudage est effectuée au moyen du dispositif de dénudage (200) sous la commande d'un dispositif de commande (110) de la machine à cintrer (100).

4. Procédé selon la revendication 1, 2 ou 3, **caractérisé en ce que**, lors de l'opération de dénudage, le matériau plat (190) à isoler est guidé et/ou maintenu des deux côtés d'une portion à dénuder par des dispositifs commandables de la machine à cintrer, notamment par un dispositif d'alimentation (160) et un dispositif de cintrage (150).

5. Procédé selon l'une des revendications précédentes, **caractérisé en ce que** la couche d'isolation est retirée sur au moins une surface latérale du matériau plat au moyen d'un couteau (235-1, 245-1) à tranchant droit (237-1) qui est disposée dans une position de travail du couteau à proximité d'une surface latérale à dégager (192-1) du matériau porteur de manière à ce qu'une partie de la couche d'isolation saisie par le couteau soit retiré du matériau porteur lorsque le matériau plat se déplace par rapport au couteau, le couteau amené dans la position de travail étant de préférence au repos pendant l'opération de dénudage et le mouvement relatif entre le couteau et le matériau plat, nécessaire pour retirer la couche d'isolation, étant causé exclusivement par le mouvement du matériau plat dans une direction de défilement.

6. Procédé selon l'une des revendications précédentes, **caractérisé en ce que** le matériau plat est dénudé simultanément sur au moins deux côtés opposés du matériau plat.

7. Système de fabrication de pièces cintrées en matériau plat isolé, ledit système comprenant une machine à cintrer (100) destinée à plier un matériau plat isolé (190) et un dispositif de dénudage destiné à dénuder des portions du matériau plat isolé, la machine à cintrer comportant un dispositif d'alimentation (160) destiné à retirer un matériau plat isolé d'une réserve de matériau, un dispositif de cintrage (150) muni d'une tête de cintrage destinée à plier le matériau plat isolé pour obtenir une pièce cintrée, en matériau plat isolé, pliée en deux dimensions ou trois dimensions et un dispositif de coupe (170) destiné à séparer la pièce cintrée du matériau plat isolé amené,
**caractérisé en ce que**
la machine à cintrer comporte un dispositif de dénudage intégré (200) destiné à dénuder des portions du matériau plat isolé (190) en continu sur le matériau plat, traversant le dispositif de dénudage, avant de séparer la pièce cintrée du matériau plat amené.

8. Système selon la revendication 7, **caractérisé en ce que** le dispositif de dénudage (200) est raccordé à un dispositif de commande (110) de la machine à cintrer (100) et **en ce que** l'opération de dénudage peut être effectuée au moyen du dispositif de dénudage sous la commande du dispositif de commande.

9. Système selon la revendication 7 ou 8, **caractérisé en ce que** le dispositif de dénudage (200) est disposé de manière statique et/ou entre le dispositif d'alimentation (160) et une tête de cintrage (155) du dispositif de cintrage (150).

10. Système selon l'une des revendications 7 à 9, **caractérisé en ce que** le dispositif d'alimentation (160) est apte à tourner sur un axe d'alimentation et **en ce que** le dispositif de dénudage (200) est fixé au dispositif d'alimentation et peut tourner avec le dispositif d'alimentation autour de la direction d'alimentation.

11. Système selon l'une des revendications 7 à 10, **caractérisé en ce que** le dispositif de dénudage comporte au moins un couteau (235-1, 245-1) à tranchant droit (237-1), le couteau pouvant être déplacé entre une position neutre sans engagement du couteau avec le matériau plat isolé (190) et une position de travail dans laquelle le tranchant du couteau est disposé à proximité d'une surface latérale à dégager (192-1) du matériau porteur de manière à ce qu'une partie, saisie par le couteau, de la couche d'isolation est retirée du matériau porteur lorsque le matériau plat se déplace par rapport au couteau.

12. Système selon l'une des revendications 7 à 10, **caractérisé en ce que** le dispositif de dénudage (200) comporte au moins un arbre de couteau (230, 240) qui peut être entraîné en rotation sur un axe de rotation (232, 242) et qui porte un couteau (235-1, 245-1) à tranchant droit (237-1), le couteau pouvant être déplacé d'une position neutre à une position de travail et, de préférence en sens opposé, de la position de travail à la position neutre par rotation de l'arbre de couteau sur l'axe de rotation, un autre couteau (235-2, 245-2) étant de préférence fixé à l'arbre de couteau (230, 240) en plus du couteau (235-1, 245-1) et pouvant être déplacé en engagement de travail avec le matériau plat par rotation de l'arbre de couteau de manière à ce qu'une portion du matériau isolant qui a été décollée par le couteau puisse être séparée par l'autre couteau du matériau isolant restant sur le matériau porteur.

13. Système selon l'une des revendications 11 ou 12, **caractérisé en ce que** le couteau (235-1, 245-1) comporte un taillant (260) pourvu d'une face de coupe (261) et d'une face de dépouille (262), le couteau étant conçu et disposé de manière à ce que, dans la position de travail, la face de dépouille s'étend sensiblement parallèlement à la surface latérale à dégager (192-1) du matériau porteur.

14. Système selon l'une des revendications 12 à 13, **caractérisé en ce que** l'arbre de couteau (230) est disposé par rapport au matériau plat (190) qui défile de manière à ce qu'un plan radial (234) défini par le tranchant (237-1) du couteau et l'axe de rotation (232) de l'arbre de couteau (230) est sensiblement perpendiculaire à la surface latérale à dégager (192-1) du matériau porteur lorsque le couteau est en position de travail.

15. Système selon l'une des revendications 12 à 14, **caractérisé en ce que** le dispositif de dénudage comporte un premier arbre de couteau (230) et un deuxième arbre de couteau (240) qui peuvent tourner sur des axes de rotation (232, 242) parallèles entre eux, une ouverture de passage du matériau plat à dénuder étant ménagée entre les arbres de couteau, une distance entre les axes de rotation (232, 242) des arbres de couteau (230, 240) étant de préférence réglable en continu.
